# EUROPEAN PATENT APPLICATION

(11) **EP 1 830 119 A1**
(43) Date of publication of application: **05.09.2007**
(21) Application number: 05851001.7
(22) Date of filing: 20.12.2005
(51) Int. Cl.: F16L 37/32, H01M 8/04

(54) **COUPLER**

(30) Priority: 24.12.2004 JP 2004373262; 25.08.2005 JP 2005243874
(71) Applicant: TOYO SEIKAN KAISHA, LTD., Tokyo 100-8522 (JP); Toyo Aerosol Industry Co., Ltd., Tokyo 100-0011 (JP); KABUSHIKI KAISHA TOSHIBA, Tokyo 105-8001 (JP)
(72) Inventor: YOSHIHIRO, Kenji, Toyo Seikan Kaisha, Ltd., Yokohama-shi, Kanagawa 2300001 (JP); HONDA, Tetsuya, Toyo Seikan Kaisha, Ltd., Yokohama-shi, Kanagawa 2300001 (JP); MAEDA, Kazuhide, Toyo Aerosol Industry Co., Ltd., Kawagoe-shi, Saitama 3501165 (JP); HANAI, Nobuyuki, Toyo Aerosol Industry Co., Ltd., Kawagoe-shi, Saitama 3501165 (JP); TAKAHASHI, Kenichi, Toshiba Corporation, Yokohama-shi, Kanagawa 2358522 (JP)
(74) Representative: Jönsson, Hans-Peter
(86) International application number: PCT/JP2005/023839
(87) International publication number: WO 2006/075517

(57) **Abstract**

A coupler 10 comprises a socket S10 comprising a valve 16 and a metal helical spring 17 for energizing the valve in a closing direction and a plug comprising a valve 24 and a metal helical spring 25 for energizing the valve in a closing direction and being capable of being detachably fitted and coupled to the socket and being capable of opening the two valves to communicate the socket and the plug to each other in a fitted and coupled state. Elastic member holders 18 and 26 are mounted at an base end portion of the valves 16 and 25 in a sealable manner and in such a manner that the valves can reciprocate in closing and opening directions, said elastic member holders housing the energizing means for energizing the valves and flow paths being formed outside of the elastic member holders. By this arrangement, by housing the metal helical springs in the elastic member holders, contact between the metal helical springs and liquid can be prevented.

## Description

### Technical Field

This invention relates to a coupler consisting of a socket and a plug which are detachably coupled to each other and, more particularly, to a coupler of this type by which liquid or other material can be easily shifted from a container to another container provided on the side of a main body or, alternatively, a container containing such liquid or other material can be exchanged per se to another one and which is particularly suitable when it is used as a coupler provided between a cartridge container for a methanol fuel cell and a fuel cell main body.

### Background Art

There are many cases where it is necessary to supplement liquid such as a raw material which decreases by operation or use of an equipment or apparatus. In such cases, supply of liquid such as a raw material is made by coupling a cartridge container to a container provided on the side of a main body of an equipment or apparatus for shifting the liquid between the two containers or by exchanging a container provided on the main body with another container.

Various detachable types of couplers are used for simply performing such coupling or exchanging between two containers.

For example, Japanese Patent Application Laid-open Publication No. 2003-172487 discloses in its FIG. 10 a coupling device which consists of a plug P having a main flow path and a sub-flow path and a socket S having a main flow path and a sub-flow path and being connectable to the plug and being capable of communicating with the main flow path and the sub-flow path of the plug in a coupled state.

According to this coupling device, the socket S comprises a main flow-path 2a formed outside of the outer periphery of a valve pusher 2 fixed to a holder 1, a sub-flow path 2b formed further outside of the main flow path 2a, and valves 3a and 3b for closing the flow paths 2a and 2b. The respective valves 3a and 3b are pushed toward their valve seats by energizing force of springs 4a and 4b to close the main flow path 2a and the sub-flow path 2b.

The plug P comprises a main flow path 6a formed outside of the periphery of a valve main body 6 held slidably by a valve holder 5, a sub-flow path 6b formed outside of the main flow path 6a, and valves 7a and 7b for closing the flow paths 6a and 6b. The respective valves 7a and 7b are pushed toward their valve seats by energizing force of springs 8a and 8b to close the main flow path 6a and the sub-flow path 6b.

When the socket S is connected to the plug P, the sub-valve 3b of the socket S abuts against the sub-valve 7b of the plug P and these valves 3b and 7b are displaced in a direction to separating apart from each other agains the force of the springs 4b and 8b thereby causing the sub-flow paths 2b and 6b to communicate with each other.

As the socket S is further connected to the plug P, the main valve 3a of the socket S is pushed by the end surface of an inner cylinder of the plug P to withdraw from the valve seat of the valve pusher 2 against the force of the spring 4a and thereby open the main flow path 2a relative to the valve pusher 2. Simultaneously, the end surface of the valve pusher of the socket S abuts against the surface of the valve provided on the valve main body 6 of the plug P and thereby the valve main body 6 of the plug P is pushed against the force of the spring 8a to cause the valve main body 6 to retreat and thereby open the main valve 7a to communicate with the main flow path 6a.

By this arrangement, when the sub-flow path is communicated, gas is supplied from a gas supply source to the inside of the container and an inner bag provided in the container is contracted to supply liquid in the inner bag from the main flow path of the plug to the outside of the container through the main flow path of the socket.

By this coupling device, in a case where an inner bag is provided in a container and liquid in the inner bag is to be taken out, pressurized gas is filled from the sub-flow path into the outside of the inner bag and thereby liquid can be taken out of the main flow path whereby the liquid in the inner bag can be taken out without contacting other kind of gas.

However, there is a case where it is necessary to prevent contact between liquid and metal when liquid in a container is to be taken out or to be supplied to another container. In a methanol fuel cell, for example, if methanol comes into contact with a metal when methanol used as fuel is supplied to a main body of the methanol fuel cell, ionized metal preoccupies a site to which hydrogen ion (proton) produced on an anode side should be moved with the result that an amount of hydrogen ion to be moved is reduced and reaction speed on the anode side thereby is reduced and, as a result, the function of the fuel cell is deteriorated.

For this reason, when the above described coupling device is used as a coupler between a fuel cell main body and a methanol container, since the metal springs which energize the valve in a closing direction are provided in the main flow path and the sub-flow path, contacting between liquid and metal is unavoidable and, as a result, this coupling device cannot be used for such purpose.

### Disclosure of the Invention

The present invention has been made in view of the problems of the prior art and it is an object of the invention to provide a coupler which can be easily connected and detached as in a case of a methanol fuel cell for supplying and taking out liquid or exchanging a container per se without contacting of liquid with metal.
1. There is provided a coupler comprising a socket comprising a valve and energizing means for energizing the valve in a closing direction and a plug comprising a valve and energizing means for energizing the valve in a closing direction and being capable of being detachably fitted and coupled to the socket and being capable of opening the two valves to communicate the socket and the plug to each other in a fitted and coupled state,
   CHARACTERIZED IN THAT said coupler comprises an elastic member holder mounted at an base end portion of the valve of at least either one of the socket and the plug in a sealable manner and in such a manner that the valve can reciprocate in closing and opening directions, said elastic member holder housing an elastic member constituting the energizing means for energizing the valve and a flow path being formed outside of the elastic member holder.
   According to this coupler, the valve is mounted on the elastic member holder in a sealable manner and in such a manner that the valve can reciprocate in closing and opening directions and the elastic member constituting the energizing means for energizing the valve is housed in this elastic member holder while the flow path is formed outside thereof. Therefore, by holding the elastic member in the elastic member holder, at least either the socket or the plug can prevent the elastic member from contacting the liquid.
2. There is provided a coupler comprising a socket comprising a valve and energizing means for energizing the valve in a closing direction and a plug comprising a valve and energizing means for energizing the valve in a closing direction and being capable of being detachably fitted and coupled to the socket and being capable of opening the two valves to communicate the socket and the plug to each other in a fitted and coupled state,
   CHARACTERIZED IN THAT said energizing means for energizing the valve of at least either one of the socket and the plug in a closing and opening directions is made of a non-metallic material.
   According to this coupler, the energizing means for energizing the valve is made of a non-metallic material. Therefore, by constructing at least either the socket or the plug constituting the coupler by a material, e.g., synthetic resin without using a metal, no problem is caused even if the energizing means contacts the liquid.
3. There is provided a coupler comprising a socket comprising a valve and energizing means for energizing the valve in a closing direction and a plug comprising a valve and energizing means for energizing the valve in a closing direction and being capable of being detachably fitted and coupled to the socket and being capable of opening the two valves to communicate the socket and the plug to each other in a fitted and coupled state,
   CHARACTERIZED IN THAT said coupler comprises an elastic member holder mounted at a base end portion of the valve of at least either one of the socket and the plug in a sealable manner and in such a manner that the valve can reciprocate in closing and opening directions, said elastic member holder housing an elastic member constituting the energizing means for energizing the valve and a flow path being formed outside of the elastic member holder, and said energizing means for energizing the valve of at least the other of the socket and the plug in closing and opening directions is made of a non-metallic material.
   According to this coupler, the valve is mounted on the elastic member holder of at least either the socket or the plug in a sealable manner and in such a manner that the valve can reciprocate in closing and opening directions and the energizing means for energizing the valve is housed in this elastic member holder while the flow path is formed outside of the energizing means. Therefore, in either one of the socket and the plug, the elastic member is housed in the elastic member holder and thereby the elastic member can be prevented from contacting the liquid. In the other of the socket and the plug, since the coupler is made of a material such as synthetic resin without using a metal, no problem is caused when it comes into contact with the liquid. By combination of these elements, contact with the liquid can be prevented in the coupler.
4. There is provided a coupler wherein, in addition to comprising the structure described in any of 1 - 3, said elastic member constituting the energizing means is made of either a metal helical spring, a non-metallic helical spring or a non-metallic elastic material.
   According to this coupler, by housing the elastic member in the elastic member holder, influence by solving out of a metal or non-metallic component can be avoided.
5. There is provided a coupler wherein, in addition to comprising the structure described in any of 1 - 3, a valve seat member to and from which the valve reciprocates is provided in a main body of the socket or in a main body of the plug, and a seal portion for sealing with an outer peripheral surface of a foremost end portion of the valve and a slit portion adjacent to the seal portion and constituting a flow path are provided on the valve seat member.
   According to this coupler, the outer peripheral surface of the valve is made the seal portion and the valve seat and the flow path are formed by the seal portion and the slit portion of the inner periphery of the valve seat member.
6. There is provided a coupler wherein, in addition to comprising the structure described in any of 1 - 3, an operating section for opening the two valves to a communicating state is provided in at least either the socket or the plug.
   According to this coupler, by the operating section provided in at least either the socket or the plug, the two valves can be brought into an open state by fitting and coupling of the socket and the plug.
7. There is provided a coupler wherein, in addition to comprising the structure described in any of 1 - 3, the valve provided in the plug is made of synthetic resin and is formed in a substantially hollow inverted conical shape and an inner peripheral surface of the central opening of a foremost end portion of the valve is made a seal portion and the plug is provided with a valve seat member comprising a valve seat which contacts the seal portion and is made in a columnar shape.
   According to this coupler, by energizing the valve in such a manner that the central opening is closed by elastic force of the side surface portion of the inverted conical portion to thereby achieve a sealed state with the side surface of the columnar valve seat, and by expanding the side surface of the inverted conical portion of the valve to thereby securing a flow path, the structure of the coupler can be simplified.
8. There is provided a coupler wherein, in addition to comprising the structure described in any of 1 - 3, the base end portion of the valve provided in the plug which valve is made of synthetic resin is formed in a manner to project from a foremost end surface of the plug in such a manner that the base end portion of the plug can be pushed against a ceiling portion of a cap fitted on the plug to form a seal.
   According to this coupler, a part of the valve made of synthetic resin is utilized also as the seal relative to the cap whereby the number of component parts can be reduced and the structure of the coupler can be further simplified.
9. There is provided a coupler wherein, in addition to comprising the structure described in any of 1 - 3, coupling holding means for maintaining the fitted and coupled state between the socket and the plug is provided between the socket and the plug.
   According to this coupler, the fitted and coupled state can be maintained by the coupling holding means whereby reacting force of the energizing means in the state where the socket and the plug are in communication with each other can be supported.
10. There is provided a coupler wherein, in addition to comprising the structure described in any of 1 - 3, after a communication path between the socket and the plug is sealed from the outside, the valve of the socket and the valve of the plug can communicate with each other.
   According to this coupler, the respective valves are communicated with each other after the socket is fitted and coupled to the plug whereby leakage of the liquid can be prevented.
11. There is provided a coupler comprising a socket comprising a valve and energizing means for energizing the valve in a closing direction and a plug comprising a valve and energizing means for energizing the valve in a closing direction and being capable of being detachably fitted and coupled to the socket and being capable of opening the two valves to communicate the socket and the plug to each other in a coupled state,
   CHARACTERIZED IN THAT said coupler comprises a housing provided on the outside of a base end portion of the valve of at least either one of the socket and the plug and housing the valve in such a manner that the valve can reciprocate in closing and opening directions and sealing can be made by end portions of the valve, an elastic member for energizing the valve provided on the outside of the valve in the housing, and a flow path formed inside of the valve.
   According to this coupler, the valve is housed in the housing provided outside of the valve in such a manner that the valve can reciprocate in closing and opening directions and sealing can be made by end portions of the valve, and the elastic member constituting the energizing means is housed outside of the valve in the housing and a flow path is formed in the sealed portion inside of the valve, Therefore, the elastic member is housed in the housing in at least either the socket or the plug whereby contact of the elastic member with the liquid can be prevented.
12. There is provided a coupler wherein, in addition to comprising the structure described in 11, change in pressure can be prevented in space outside of the valve in the housing wherein the elastic member is provided.
   According to this coupler, since change in pressure can be prevented in space outside of the valve in the housing wherein the elastic member is provided, change in pressure in the space where the elastic member is mounted can be prevented even when the valve reciprocates in opening and closing thereof whereby absorption of the liquid due to negative pressure and discharge of the liquid due to increase in pressure can be prevented. Therefore, even if a metal spring is used as the elastic member, contact between the liquid and the metal can be accurately prevented.
13. There is provided a coupler wherein, in addition to comprising the structure described in 11 or 12, a seal member for sealing the fitted and coupled state between the socket and the plug is mounted on the plug.
   According to this coupler, a seal member for sealing the fitted and coupled state between the socket and the plug is mounted on the plug. By providing the seal member in the plug on the cartridge side, the problem of fatigue and damage of the seal member can be avoided as compared with a case where the seal member is provided on the socket of the main body of the equipment or apparatus.
14. There is provided a couple wherein, in addition to comprising the structure described in 11 or 12, coupling holding means for maintaining the fitted and coupled state between the socket and the plug is provided between the socket and the plug.
   According to this coupler, the fitted and coupled state can be maintained by the coupling holding means whereby reacting force of the energizing means in the state where the socket and the plug are in communication with each other can be supported.
15. There is provided a coupler wherein, in addition to comprising the structure described in 11 or 12, after a communication path between the socket and the plug is sealed from the outside, the valve of the socket and the valve of the plug can communicate with each other.
   According to this coupler, the respective valves are communicated with each other after the socket is fitted and coupled to the plug whereby leakage of the liquid can be prevented.
16. There is provided a coupler wherein, in addition to comprising the structure described in any of 1, 2, 3 and 11, said coupler is provided between a main body of a methanol fuel cell and a container containing methanol used as a fuel.

This coupler can satisfy all functions necessary for a coupler provided between the main body of the methanol fuel cell and the container containing methanol used as a fuel.

As a coupler provided between the main body of the methanol fuel cell and the container containing methanol used as a fuel, the following conditions should be satisfied:
1) The coupler can be attached and detached in a simple manner.
2) Both the socket and the plug can be brought to a sealed state in which the valve is closed in a non-coupled state.
3) In a coupled state, the valve can be opened and maintained in this state.
4) Fuel can be filled easily by a simple manner such as squeezing the container.
5) In a coupled state, the valve can be opened after a sealed state has been established.
6) After releasing from a coupled state, an amount of liquid left on the connecting portion is significantly small.
7) The coupler has a structure by which liquid contents do not contact metal directly.
8) The coupler has a structure in which influence of change in pressure accompanying reciprocating motion of the valve can be avoided.

### Brief Description of the Drawings

FIG. 1 shows an embodiment of the coupler of the present invention in which (a) is a vertical section of a state before coupling and (b) is a vertical section of a coupled state.
FIG.2 shows another embodiment of the coupler of the present invention in which (a) is a vertical section of a state before coupling and (b) is a vertical section of a coupled state.
FIG.3 shows another embodiment of the coupler of the present invention in which (a) is a vertical section of a state before coupling and (b) is a vertical section of a coupled state.
FIG.4 is a vertical section showing only a plug of another embodiment of the coupler of the present invention.
FIG.5 shows another embodiment of the coupler of the present invention in which (a) is a vertical section of a state before coupling and (b) is a vertical section of a coupled state.
FIG.6 shows another embodiment of the coupler of the present invention in which (a) is a vertical section of a state before coupling and (b) is a vertical section of a coupled state.
FIG.7 shows another embodiment of the coupler of the present invention in which (a) is a vertical section of a state before coupling and (b) is a vertical section of a coupled state.
FIG. 8 is a vertical section of another embodiment of the coupler of the present invention showing a state before coupling.
FIG. 9 is vertical section of the same embodiment of the coupler of the invention showing a coupled state.

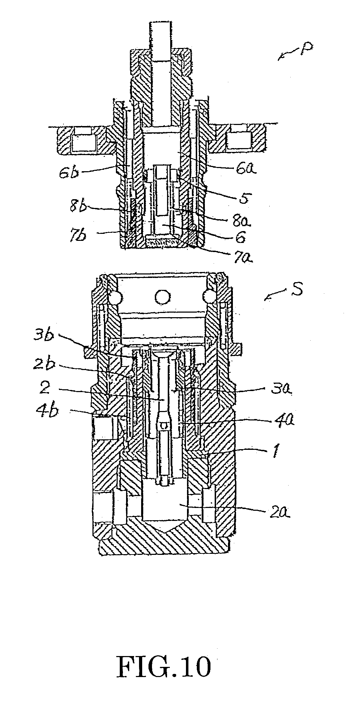

FIG. 10 is vertical section showing a prior art coupling device.

### Description of Preferred Embodiments of the Invention

Embodiments of the invention will now be described in detail with reference to the drawings.

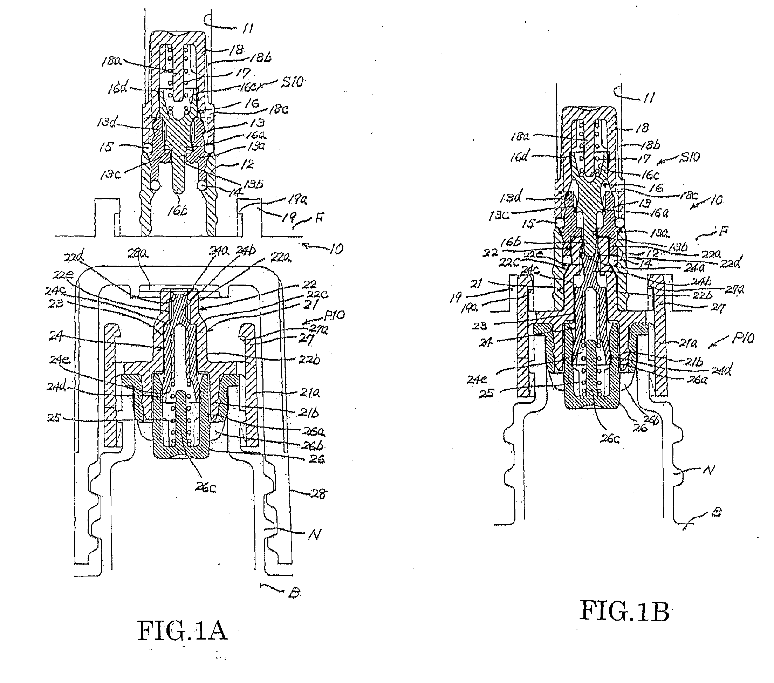

FIG. 1 shows an embodiment of the coupler of the present invention in which (a) is a vertical section of a state before coupling and (b) is a vertical section of a coupled state.

This coupler 10 is composed of a socket S10 and a plug P10 which can be fitted and coupled to the socket S10. The socket S10 is provided on the side of a main body F of, e.g., a methanol fuel cell and the plug P10 is provided on the side of a cartridge which is a container of methanol. The coupler 10 is used for supplementing fuel to the main body side by communication between the socket S10 and the plug P10 or exchanging the cartridge per se. The main portion of the coupler is made of synthetic resin such as polypropylene.

The following description is made as viewed in the vertical direction of the components appearing on the drawings but this description in no way restricts the direction of mounting the coupler to the actual main body. Mounting of the coupler to the main body may be carried out in any direction.

The socket S10 of this coupler 10 has a substantially cylindrical socket main body 12 which is mounted on the foremost end portion (lower end portion in the drawing) of the inner periphery of a mounting opening 11 formed as a member which is attached integrally or as a separate member to the main body F of the fuel cell.

In this socket main body 12, a substantially cylindrical valve seat member 13 having in its middle portion a partition portion 13a with a central flow opening 13b is mounted at its foremost end portion via an O ring 14. By means of this O ring 14, seal is made between the socket main body 12 and the valve seat member 13 and also between the socket main body 12 and the plug P10 which is fitted and coupled to the socket main body 12.

An O ring 15 is provided on the outer periphery of the middle portion of the valve seat member 13 for achieving seal between the mounting opening 11 and the valve seat member 13.

In the valve seat member 13, a seal portion 13c which is made of the side surface of he cylinder and constitutes a valve seat is formed in the inner periphery of the base end side (upper side in the drawing) of the flow opening 13b, and a plurality of slit portions 13d in the form of vertical slits are formed on the upper side adjacent to the seal portion 13c in the direction of the central axis at an equal distance in the circumferential direction.

A piston valve 16 which constitutes a valve is mounted in the valve seat member 13. The piston valve 16 has a valve member 16a which is fitted slidably to the seal portion 13c of the valve seat member 13 and also has an operation portion 16b projecting from the center of valve member 16a. By projecting this operation portion 16b from the flow opening 13b, a valve of the coupled plug P10 can be opened.

In the inner periphery of the base portion of the piston valve 16 constituting the valve is formed a spring mounting portion 16c in which a metal helical spring17 constituting energizing means which exercises energizing force in the valve closing direction is mounted. In the outer periphery of the base portion of the piston valve 16 is formed a skirt portion 16d for sealing.

A substantially cylindrical elastic member holder 18 having a bottom is provided on the side of the base portion of the piston valve 16 and on the outer periphery of the valve seat member 13. The elastic member holder 18 is fixedly fitted to the outer periphery of the valve seat member 13 and the inner periphery of the mounting opening 11 and is sealed by the O ring 15.

In this elastic member holder 18, the skirt portion 16d for sealing of the piston valve 16 is slidably mounted in a sealed state and the metal helical spring 17 is mounted on the spring mounting portion 16c of the piston valve 16 and a guide portion 18a formed in the elastic holder member 18 to energize the piston valve 16 in closing direction.

The outer peripheral portion of the base portion of the elastic member holder 18 has a smaller diameter than the mounting opening 11 to form a flow path 18b.

Further, a plurality of slits 18c communicating the flow path 18b on the outer periphery of the elastic member holder 18 with the inner peripheral portion of the valve seat member 13 are formed at an equal distance in the circumferential direction of the elastic member holder 18.

As coupling holding means for holding a fitted and coupled state between the socket S10 and the plug P10, locking grooves 19 are formed on the outside of the mounting opening 11 attached to the main body F of the fuel cell as an integral member or a separated member. As the locking grooves 19, a couple of grooves, for example, respectively in arcuate form of about 30 degrees are provided oppositely across the central axis. Stepped portions are formed in the middle portions of opposite positions of the locking grooves 19 so that hooks are engaged to the stepped portions and - the hooks are released and rotated in portions of the locking grooves 19 where there are no stepped portions.

In the socket S10 of the coupler 10 constructed in the above described manner, when the piston valve 16 constituting the valve is pushed up by means of the operation portion 16b against the force of the metal helical spring 17, the valve portion 16a is displaced from the seal portion 13c of the valve seat member 13 to the slit portions 13d and thereby the valve is opened. The inside of the socket main body 12 is communicated with a tank of the fuel cell F via the flow opening 13b, seal portion 13c of the valve seat member 13, slit portions 13d, slits 18c of the elastic member holder 18 and flow path 18b on the outer periphery of the elastic member holder 18. Conversely, when the push up force to the piston valve 16 is released, the valve portion 16a of the piston valve 16 is positioned at the seal portion 13c of the valve seat member 13 whereby the valve closed state is maintained.

According to this socket S10, the component elements are made of a non-metallic material and, even when the piston valve 16 is pushed up to open the valve and thereby cause the liquid to flow through the flow path, the metal helical spring 17 is held in a sealed state by the piston valve 16 and the elastic member holder 18 and, therefore, direct contact of the metal helical spring 17 with the liquid is avoided and solving out of ionic metal in the liquid can be prevented.

Description will now be made about the plug P10 which is fitted and coupled with the socket S10.

As the plug P10 of the coupler 10, a plug which is made, like the socket S10, of a non-metallic material and in which, even if a metal helical spring is used, it will not come into direct contact with liquid flowing through a flow path will be used.

The plug P10 has a plug main body 21 which is mounted on the outer periphery of the foremost end portion (upper portion in the drawing) of a nozzle N of a container B containing methanol which is a fuel of the fuel cell. The nozzle N of the container B is mounted on the inner periphery of a large diameter cylindrical portion 21a of the base portion of the plug main body 21 and a small diameter portion of the foremost end portion constitutes a valve seat portion 22 used as a valve seat.

The valve seat portion 22 of the plug P10 has a configuration corresponding to a substantially cylindrical opening formed by the socket main body 12 and the valve seat member 13 of the socket S10. The foremost end portion of the valve seat portion 22 is formed as a small diameter portion 22a corresponding to the inner periphery of the valve seat member 13 and the base portion of the valve seat portion 22 is formed as a large diameter portion 22b corresponding to the inner periphery of the socket main body 12. The small diameter portion 22a continues to the large diameter portion 22b through a conical surface 22c and a seal is achieved by contacting of the conical surface 22c with the O ring 14 of the socket S10.

The inner peripheral portions of the large diameter cylindrical portion 21a of the base portion and the valve seat portion 22 of the plug main body 21 of the plug P10 are used as a flow path 23. A seal portion 22d constituting a valve seat having a cylindrical side surface is formed at the foremost end portion of the valve seat portion 22 and a plurality of slit portions 22e in the form of vertical slits are formed adjacent to the seal portion 22d on the lower side thereof in the direction of the central axis at an equal distance in the circumferential direction.

In this valve seat member 22 is mounted a piston valve 24 which constitutes the valve. The piston valve 24 has a valve portion 24a which is slidably fitted to the seal portion 22d of the valve seat member 22. A portion below the valve portion 24a is a small diameter portion 24b having a smaller diameter than the slit portions 22e. A portion below a stepped portion 24c is formed in a cylindrical shape having a gap constituting a flow path relative to the inner peripheral surface of the portion having the conical surface 22c of the valve seat portion 22. A skirt portion 24d for sealing is formed in the lower outer peripheral portion of the piston valve 24.

In the inner periphery of the base portion of the piston valve 24 which constitutes the valve, there is formed a spring mounting portion 24e in which a metal helical spring 25 constituting energizing means for energizing in the valve in closing direction is mounted.

For supporting the metal helical spring 25 energizing the piston valve 24, an elastic member holder 26 is disposed on the base portion side of the piston valve 24. An inner cylindrical portion 21b projecting in a space inside of the large diameter cylindrical portion 21a of the plug main body 21 is fitted and fixed between an inner cylinder and an outer cylinder of the elastic member holder 26 having a substantially double cylindrical shape with a bottom.

The inner periphery of the outer cylinder of the elastic member holder 26 is sealed against the inner cylindrical portion 21b of the plug main body 21 while a gap constituting a flow path 26a is formed between the inner cylindrical portion 21b of the plug main body 21 and the outer periphery of the inner cylinder of the elastic member holder 26 and a slit 26b is formed at the bottom portion of the outer cylinders of the elastic member holder 26 to communicate with the inside of the nozzle N of the container B.

In the inner cylinder of the elastic member holder 26 is silidably mounted the skirt portion 24d for sealing of the piston valve 24 in a sealed state. A metal helical spring 25 is mounted in a spring mounting portion 24e of the piston valve 24 and a guide portion 26c formed in the elastic member holder 26 to energize the piston valve 24 in closing direction.

Since the outer periphery of the inner cylinder of the elastic member holder 26 and the outer periphery of the piston valve 24 form a flow path and the elastic member holder 26 and the piston valve 24 are sealed by the skirt portion 24d for sealing, the metal helical spring 25 housed in the spring mounting portion 24e of the piston valve 24 and the elastic member holder 26 does not directly contact the liquid flowing through the flow path.

In the plug P10 of this coupler 10, as coupling holding means for holding a fitted and coupled state between the socket S10 and the plug P10, locking arms 27 are provided. Hooks 27a are formed on the inner side of the foremost end portions of, e.g., a couple of locking arms 27. These hooks 27a are inserted in locking grooves 19 which are attached in the main body F of the fuel cell as an integral member or a separated member. Stepped portions are formed in the middle portions of opposite positions of the locking grooves 19 and the hooks are engaged to the stepped portions 19a to maintain the coupled state and the hooks are released and rotated in portions of the locking grooves 19 where there are no stepped portions 19a to release the coupled state.

In this plug P10 of the coupler 10, when the piston valve 24 constituting the valve is pushed down by the operation portion 16b of the socket S10 against the force of the metal coil spring 25, the valve portion 24a is displaced from the seal portion 22d of the valve seat portion 22 to the slit portion 22e and the valve thereby is opened. The inside of the nozzle N of the container B is communicated to the outside through the slit 26b, the flow path 26a between the outer periphery of the inner cylinder of the elastic member holder 26 and the outer periphery of the piston valve 24, the flow path between the outer periphery of the piston valve 24 and the inner peripheral surface of he valve seat portion 22, the stepped portions 24c, the slit portion 22e of the valve seat portion 22 and the seal portion d22d of the valve seat portion 22 and, since the socket S10 is coupled, the inside of the nozzle N can be communicated to the tank of the fuel cell F through the socket S10.

Conversely, when the pushing down force acing on the piston valve 24 is released, the valve portion 24a of the piston valve 24 is positioned to the seal portion 22d of the valve seat portion 22 by the energizing force of the metal spring coil 25 whereby the valve closed state is maintained.

According to this plug P10, even when the piston valve 24 is opened and the liquid flows through the flow path 23, the metal helical spring 25 is sealed by the piston valve 24 and the elastic member holder 26 and, therefore, direct contact of the metal helical spring with the liquid can be avoided and solving out of ionized metal in the liquid can be prevented.

A cover cap 28 is screwed on the container B for which the plug P10 is provided and seal is made by a packing 28a attached to a top inside portion of the cover cap 28.

When the socket S10 is brought into a fitted and coupled state with the plug P10 in this coupler 10 consisting of the socket S10 and the plug P10, the foremost end portion of the valve seat portion 22 of the plug main body 21 contacts the O ring 14 of the socket main body 12 to achieve a seal. In this state, the top of the piston valve 24 of the plug P10 is pushed down by the operating portion 16b of the socket S but, since the valve portion 24a is positioned in the lower portion of the seal portion 22d, the valve closed state is maintained.

Further, as the plug P10 is pushed into the socket S10, the valve portion 16a of the piston valve 16 of the socket S10 and the valve portion 24a of the piston valve 24 of the plug P10 are displaced from the seal portions 13c and 22d to the slit portions 13d and 22e whereby the plug P10 is communicated with the socket S10.

The fitted and coupled state between the plug P10 and the socket S10 can be maintained by engaging the hooks 27a of the lock arms 27 with the stepped portions 19a of the locking grooves 19.

Methanol can be supplemented by supplying methanol under pressure to the tank of the fuel cell F by squeezing the container B, thereby compressing air in the space once and returning the compressed air to the container by stopping squeezing. Alternatively, the container itself may be exchanged.

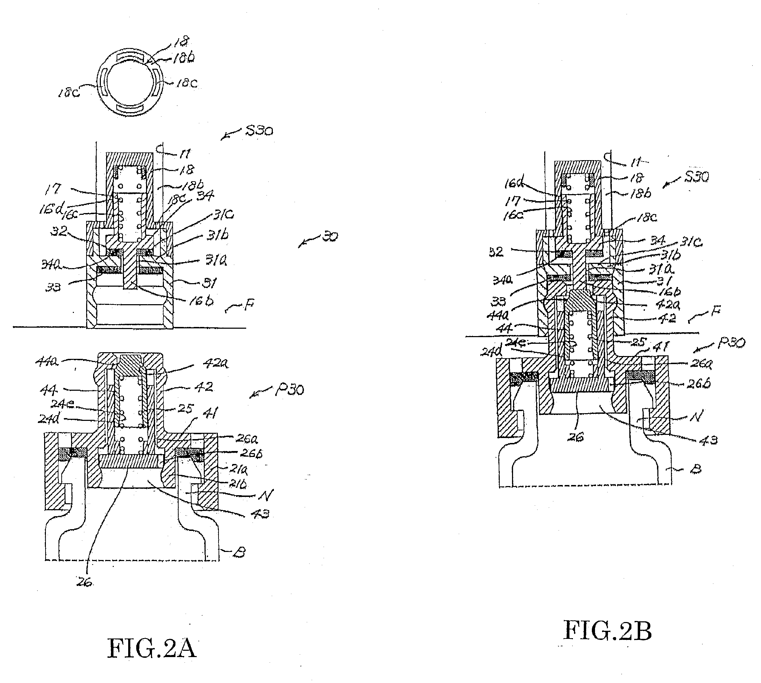

Another embodiment of the coupler of the present invention will now be described with reference to FIG. 2. The same component parts as those of the above described embodiment are designated by the same reference characters and duplicating description will be omitted.

FIG.2 shows another embodiment of the coupler of the present invention in which (a) is a vertical section of a state before coupling and (b) is a vertical section of a coupled state.

In this coupler 30, a socket main body 31 of a socket S30 has a configuration of the previously described socket main body 12 and the valve seat member 13 connected together. The inner surface of a partition portion 31b partitioning the socket main body 31 and being formed with a central opening 31a constitutes a seal portion 31c formed in a flat valve seat. A sealing packing 33 is provided on the outer surface of the partition portion 31b for achieving seal with the foremost end surface of a plug P30.

The foremost end surface of the piston valve 34 constitutes a flat valve portion 34a and the valve is closed by pushing the valve portion 34a against the sealing packing 32 of the seal portion 31c whereas the valve is opened by forming a gap between them.

The structure of the other components of the socket S30 is the same as the above described structure of the socket S10.

In this socket S30, since the valve portion 34a of the piston valve 34 is the foremost end portion which crosses the sliding direction, resistance in the valve portion is small and operating force necessary for opening of the piston valve 34 is only force counteracting the metal helical spring 17 and resistance of the skirt portion 16d for sealing whereby energizing force can be reduced and connection can be made with a small force as compared with the case of using the coupler 10.

The socket S30 of the coupler 30 performs functions and advantageous results similar to those which have been described above with respect to the socket S10 of the coupler 10.

On the other hand, the plug P30 of the coupler 30 has a seal portion 42a of a conical surface as a valve seat in the foremost end portion of a flow path 43 of a valve seat portion 42 of a plug main body 41, which is a structure different from the above described seal portion 22d on the inner periphery of the cylinder.

A valve portion 44a in the foremost end portion of a piston valve 44 is also formed in a conical surface and the valve is closed by pressing the valve portion 44a of the conical surface to the seal portion 42a.

The structure of the other components is the same as the structure of the components of the plug P10 of the coupler 10.

In this plug P30, since the valve portion 44a of the piston valve 44 is the conical surface at the foremost end portion in the sliding direction, resistance in the valve portion is small and operating force necessary for opening the piston valve 44 is only force counteracting the metal helical spring 25 and resistance of the skirt portion 24d for sealing whereby energizing force can be reduced and connection can be made with a small force as compared with the case of using the plug P10 of the coupler 10.

The plug 30 of the coupler 30 performs functions and advantageous results similar to those which have been described above with respect to the plug P10 of the coupler 10.

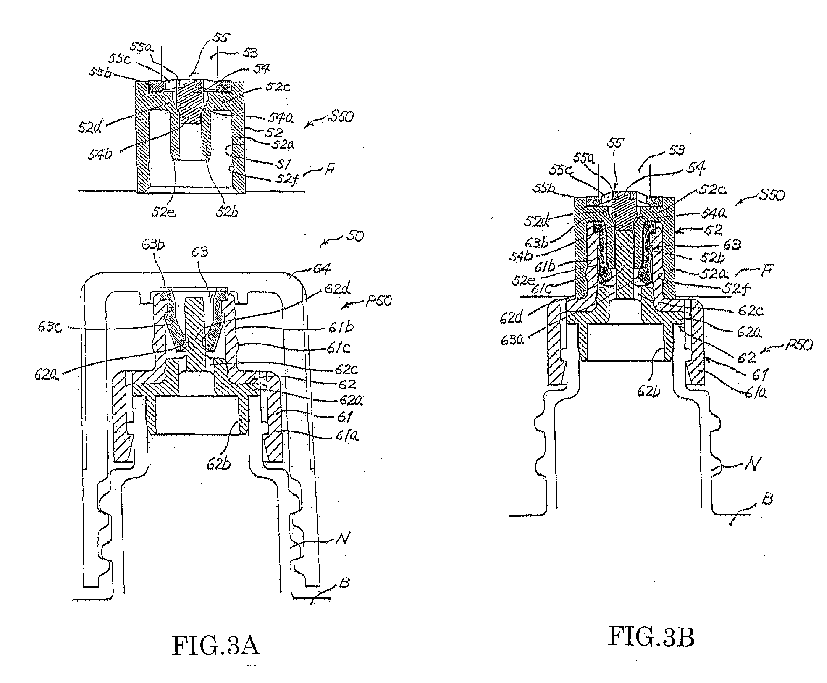

Another embodiment of the coupler of the present invention will now be described with reference to FIG. 3.

FIG.3 shows another embodiment of the coupler of the present invention in which (a) is a vertical section of a state before coupling and (b) is a vertical section of a coupled state.

In a socket S50 of a coupler 50, all of component parts are made of a non-metallic material such as synthetic resin. The socket S50 has a socket main body 52 of a substantially double cylinder shape which is mounted on the inner periphery of a mounting opening 51 which is attached to the main body F of the fuel cell as an integral or separate member in such a manner that the outer periphery of an outer cylinder 52a is fitted to the mounting opening 51.

This socket main body 52 has in its base portion a partition portion 52c which partitions an outer cylinder 52a and an inner cylinder 52b. A flow path opening 53 is defined in the inner cylinder 52b and the inner peripheral surface of the flow path opening 53 constitutes a seal portion 52d in the form of a conical valve seat and a downwardly projecting foremost end portion of the inner cylinder constitutes an operation portion 52e.

A valve 54 is mounted in this socket main body 52. The valve 54 has a valve portion 54a of a conical surface corresponding to the seal portion 52d of a conical surface and an integrally formed guide portion 54b of a columnar shape of a small diameter which is provided below the valve portion 54a in a manner to slide along the inner surface of the inner cylinder 52b.

A synthetic resin spring 55 in the form of a cone disc spring constituting the energizing means is mounted on the base portion of the valve 54 to energize the valve 54 in closing direction.

This synthetic resin spring 55 in the form of a cone disc spring is made by connecting a central mounting portion 55a with an outer peripheral fixing ring portion 55b by means of a radially extending connecting portion 55c.

The fixing ring portion 55b of the synthetic resin spring 55 is mounted on the inner periphery of the base portion of the outer cylinder 52a of the socket main body 52 and the central mounting portion 55a is mounted on the base portion of the valve 54. By this arrangement, the valve portion 54a of the valve 54 can be pressed against the seal portion 52d constituting the valve seat to close the valve by flexing the connecting portion 55c and, by pushing back the valve 54 from this state, the connecting portion 54c is further flexed to open the valve.

Accordingly, the socket S50 can be constructed of the synthetic resin valve 54 and the synthetic resin spring 55 constituting the energizing means for energizing the valve 54 in closing direction without using a metal helical spring whereby a socket S for a liquid which is unsuitable for contacting a metal can be realized in a simple manner.

As a plug P50 to which the socket S50 is fitted and coupled, a plug in which a metal helical spring is not used but all of component parts are made of a non-metallic material is used.

The plug P50 of this coupler 50 comprises a plug main body 61 which is mounted on the outer periphery of the foremost end portion (upper end portion in the drawing) of a nozzle of a container containing methanol used as a fuel of the fuel cell. The inner peripheral portion of a large diameter cylindrical portion 61a at the base end portion is mounted on a nozzle N of a container B and a small diameter portion 61b at the foremost end portion constitutes a portion which is fitted and coupled to the socket main body 52 of the socket S50. The outer peripheral surface of the small diameter portion 61b is fitted on the inner periphery of the outer cylinder 52a of the socket main body 52 and the fitted and coupled state can be maintained by an annular projecting portion 61c of the small diameter portion 61b and an annular groove 52f of the socket main body 52.

A valve seat portion 62 is mounted on the inner periphery of the plug main body 61. A flange portion 62a in the form of a disk is in abutting engagement against the foremost end surface of the nozzle N of the container B and also in abutting engagement against the inner surface of a disk portion 61d which connects the large diameter cylindrical portion 61a with the small diameter portion 61b of the plug main body 61.

An upwardly projecting cylindrical mounting portion 62b which is fitted to the inner periphery of the small diameter portion 61b of the plug main body 61 is formed integrally with the flange portion 62a. In the central portion, an upwardly projecting columnar valve seat portion 62d is integrally formed with the mounting portion 62b with a slit portion 62c which constitutes a flow path.

The outer side surface of the columnar valve seat portion 62d is used a valve seat and also used as an operation portion for the socket S.

A valve 63 of this plug P50 which is made of an elastic member such as synthetic resin is formed in a hollow, substantially inverted conical shape. An opening having a smaller diameter than the valve seat portion 62d is formed in the tapering lower end portion of the valve 63 and the inner peripheral surface of the opening constitutes an inwardly projecting valve portion 63a. An upper end portion 63b having a large diameter of the valve is mounted on the inner periphery of the foremost end portion of the plug main body 61.

By locating the valve portion 63a projecting in the inner periphery of the opening of the valve 63 against the side surface of the columnar valve seat member 62d, a seal can be achieved by elastic force of the valve 63 itself to close the valve. By spreading the conical surface 63c of the valve 63 outwardly by inserting the cylindrical operation portion 52e of the socket S50, a gap is formed between the valve and the valve seat of the columnar surface of the valve seat member 62d to open the valve and, at the same time, seal can be achieved by between the valve 63 and the plug main body 61 by pressing the outer peripheral surface of the valve 63 which has been spread to the valve open state against the inner peripheral surface of the plug main body 61.

The upper end portion of the valve 63 extends outwardly to function as a packing when a cover cap 64 is screwed onto the nozzle N and also achieve a seal by abutting against the partition portion 52c of the socket main body 52 when the plug P50 is coupled to the socket S50.

Therefore, according to the plug P50, energizing means for exercising energizing force in closing direction can be constructed of elasticity of the valve 63 itself without using a metal helical spring whereby the plug P50 for liquid for which contact with a metal is undesirable can be realized in a simple manner.

In the coupler 50 made of the socket S50 and the plug P50, when they are brought into a fitted and coupled state, the foremost end portion of the foremost end small diameter portion 61b of the plug main body 61 first comes in contact with the inner peripheral surface of the socket main body 52 to start coupling of the socket S50 and the plug P50 while the foremost end portion of the operation portion 52e of the socket main body 52 comes in contact with the inner periphery of the side surface 63c of the valve 63 thereby to achieve a seal between them. In this state, the side surface 63c of the valve 63 is spread out with the operation portion 52e of the socket S50 but the valve portion 63a of the valve 63 is in a sealed state relative to the valve seat portion 62d of the columnar side surface to maintain the valve closed state while, in the socket S50, the valve seat portion 62d which constitutes the operation portion does not contact the lower surface of the valve 54 and, therefore, the valve 54 is in a sealed state to maintain the valve closed state.

As the plug P50 is further pushed into the socket S50, the operation portions 52e and 62d of the socket S50 and the plug P50 bring the valves 54 and 63 into the valve open state.

More specifically, in the socket S50, the valve seat portion 62d constituting the operation portion of the plug P50 pushes up the lower surface of the valve 54 to open the valve. In the plug P50, the operation portion 52e of the socket S50 spreads out the side surface 63c of the valve 63 to form a gap relative to the valve seat portion 62d of the columnar side surface and thereby open the valve. Thus, the plug P50 is communicated with the socket S50.

By engaging the annular projecting portion 61c with the annular groove portion 52f, the fitted and coupled state between the plug P50 and the socket S50 can be maintained and, in comparison with a case of using a metal helical spring, force acting to separate the plug P50 from the socket S50 is small and, therefore, the fitted and coupled state can be easily maintained with a relatively small force.

Methanol can be supplemented by supplying methanol under pressure to the tank of the fuel cell F by squeezing the container B, thereby compressing air in the space once and returning the compressed air to the container by stopping squeezing. Alternatively, the container itself may be exchanged.

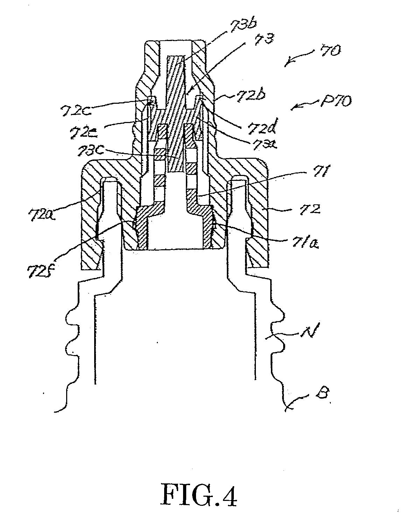

Another embodiment of the coupler of the present invention will now be described with reference to FIG. 4. The same component parts as those of the above described embodiments are designated by the same reference characters and duplicationg description will be omitted.

FIG.4. is a vertical section showing only a plug of this embodiment of the coupler of the present invention.

In this coupler 70, energizing means for energizing a valve of the plug P70 in closing direction is made of a synthetic resin helical spring 71 instead of a metal helical spring. All component parts of this coupler is made of a non-metallic material.

The plug P70 of the coupler 70 comprises a plug main body 72. The plug main body 72 has in its base portion a bottle mounting portion 72a of a double cylindrical shape. A nozzle N of a container B is inserted between the inner and outer cylinders of the bottle mounting portion 72a. The plug main body 72 has in its foremost end portion an integrally formed insertion portion 72b for a socket S of a small diameter cylindrical shape

In the inner periphery of the insertion portion 72b of a small diameter cylindrical shape, a seal portion 72c constituting a valve seat having a cylindrical side surface is formed via a stepped portion 72d and, in the lower side of the seal portion 72c, a plurality of slit portions 72e made of vertical slits are formed.

A piston valve 73 is mounted in the plug main body 72. The piston valve 73 has a piston portion 73a having an outer diameter corresponding to the seal portion 72c and integrally formed upper and lower columnar portion projecting upwardly and downwardly in the central portion of the piston portion 73a. The upper columnar portion constitutes an operation portion 73b and the lower columnar portion constitutes a guide portion 73c for the synthetic resin helical spring 71.

In this plug P70, by positioning of the piston portion 73a of the piston valve 73 at the seal portion 72c of the plug main body 72, a seal can be achieved to close the valve and, by displacing of the piston portion 73a from seal portion 72c to the slit portions 72e, the seal is released to open the valve.

As the energizing means for energizing the piston valve 73 in closing direction, the synthetic resin helical spring 71 is used. The energizing force is imparted by abutting of a foremost end portion of the spring 71 against the lower surface of the piston portion 73a and engaging of the engaging projecting portion 71a at the outer periphery of the base portion with an engaging groove 72f on the inner periphery of the inner cylinder of the double cylinder portion of the plug main body 72.

In this plug P70, the synthetic resin helical spring 71 contact liquid but there is no solving out of ionized metal and the plug P70 therefore can be used as a plug P for a fuel cell without causing any problem.

This plug P70 can be combined with the above described socket S (S10, S30 and S50) to form a coupler which can be used for a fuel cell.F.

Description has been made about the coupler made of various types of sockets and plugs with reference to plural embodiments. It is possible to form the coupler of the present invention by changing combination of the above described respective sockets and plugs.

Description will now be made about a coupler formed by changing combination of a socket and plug. The same component parts as those of the above described embodiments will be designated by the same reference characters and description thereof will be omitted.

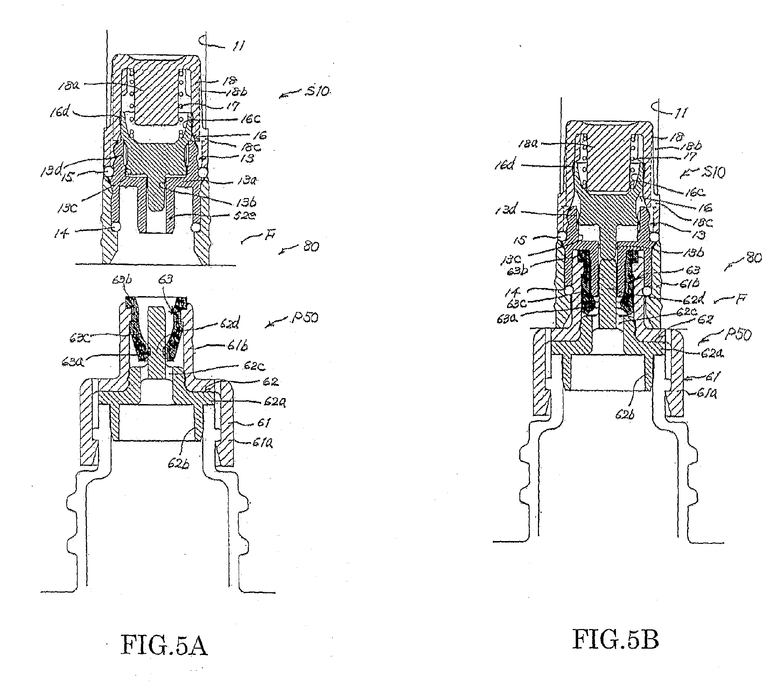

For example, as shown in FIG. 5, a coupler 80 has as a socket S the socket S10 of the coupler 10 described with reference to FIG. 1 in which the metal helical spring 17 is housed in the elastic member holder 18 while a plug is made of the plug P50 of the coupler 50 in which the valve 63 can exercise energizing force in closing direction by elasticity of the valve 63 itself.

According to this coupler 80, energizing in closing direction of the socket S10 which is the coupler on the side of the main body of the fuel cell F is made by using the metal helical spring 17 whereby reliability in repeatedly using the coupler can be improved while energizing in closing direction of the plug P50 which is used only several times to ten times as in the case of a container B used as a cartridge is made by elasticity of the valve 63 itself whereby the number of component parts can be reduced and the structure of the coupler thereby can be simplified and cost can be saved.

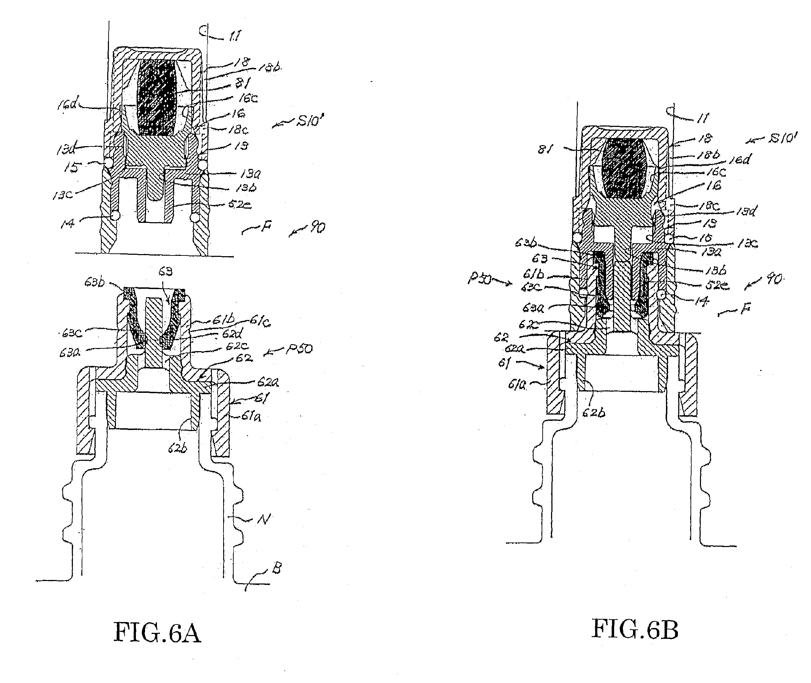

As shown in FIG. 6, a coupler 90 employs a socket S10 in which, instead of the metal helical spring 17 used as the energizing means for energizing the valve of the socket S10, an elastic member 81 such as rubber is used and energizing force is imparted by utilizing flexing of the elastic member 81 in the axial direction while the coupler 90 employs the plug P50 as a plug P.

As the elastic member, thermoplastic elastomer and rubber, for example, may be used. Thermoplastic elastomers which can be used include, for example, styrene butadiene styrene block copolymer, epoxidated styrene elastomer, styrene isobutylene styrene block copolymer, hydrogenated styrene block copolymer, hydrogenated SBC compound, simple blend type olefin elastomer, cross linking type elastomer, vinyl chloride type elastomer, chlorinated ethylene copolymer cross linking alloy, chlorinated polyethylene elastomer, syndiotactic 1,2-polybutadiene, urethane elastomer, polyester elastomer, polyamide elastomer, fluorine elastomer and silicone elastomer.

Rubber (based on classification of rubber of ASTM) which can be used include, for example, rubber having a M:polymethylene type saturated main chain, e.g., ethylene-propylene-diene co-polymer, ethylene-propylene co-polymer, completely hydrogenated acrylonitrile-butadiene rubber, completely hydrogenated styrene-butadience rubber and completely hydrogenated styrene-isoprene rubber, rubber having oxygen in the main chain, e.g., epichlorohydrin rubber, rubber having silicon and oxygen in the main chain e.g., vinylmethylsilicone rubber, rubber having unsaturated carbon bond in the main chain as natural rubber and diene type rubber e.g., butadiene rubber, chloroprene rubber, hydrogenated acrylonitrile-butadiene rubber, acrylonitrile-butadiene rubber, isobutene-isoprene rubber, natural rubber, hydrogenated styrene-butadiene rubber, styrene-butadiene rubber, hydrogenated styrene-isoprene rubber and styrene-isoprene rubber, rubber having carbon, oxygen and nitrogen in the main chain e.g., polyether urethane, rubber having nitrogen without having oxygen or phosphorus, rubber having sulfur in the main chain e.g., polysulfide rubber, and rubber having phosphorus and nitrogen e.g., phosphazene rubber.

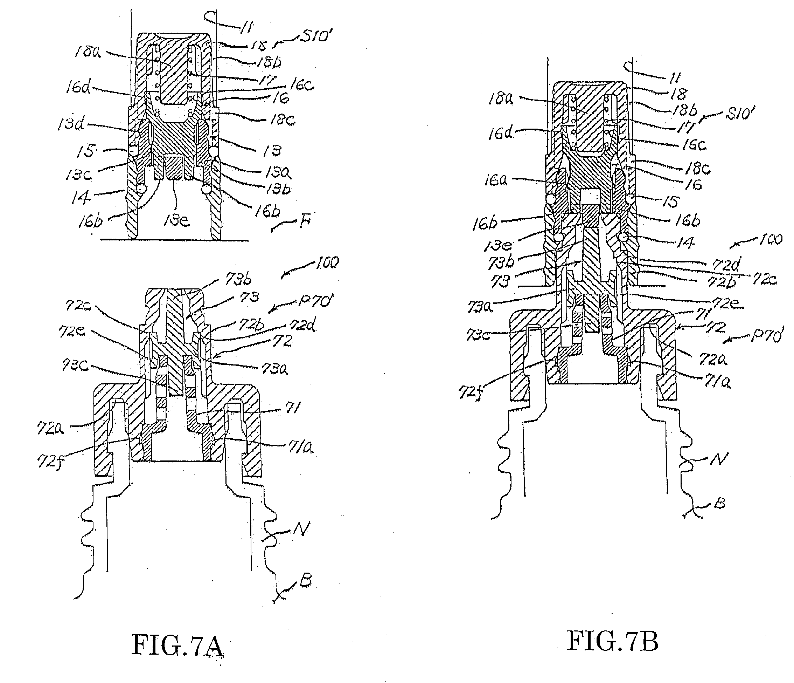

Fruther, in the coupler 100, as shown in FIG. 7, a socket in which the metal helical spring 17 is housed in the elastic member holde 18 as in the socket S10 of the coupler 10 is used as a socket S10' and a plug in which energizing force is exercised by elasticity of the synthetic resin helical spring 71 of the same construction as the plug P70 of the coupler 70 is used as a plug P70'.

In the foremost central portion of the valve seat member 13 of the socket S10' is provided the operation portion 13e. A couple of operation portions 16b are provided in the piston valve 16 in a manner to project on both sides of the operation portion 13e.

In the coupler 100 made by the combination of the socket S10' and the plug P70' also, solving out of ionized metal is prevented and a coupler satisfying necessary conditions as a coupler of a fuel cell can be constructed in further simple manner.

A coupler may also be constructed by other combination of a socket S and a plug P than those described above.

By adjusting balance of strength between the energizing means of the socket and the energizing means of the plug, the order of closing and opening of the valve of the socket and the valve of the plug can be controlled.

For example, by weakening the energizing means of the socket compared with the energizing means of the plug and opening the valve of the socket earlier than the valve of the plug during a coupled state and closing the valve of the socket later than the valve of the plug when the coupled state is released, an amount of retained liquid which leaks out when the coupled state is released can be reduced.

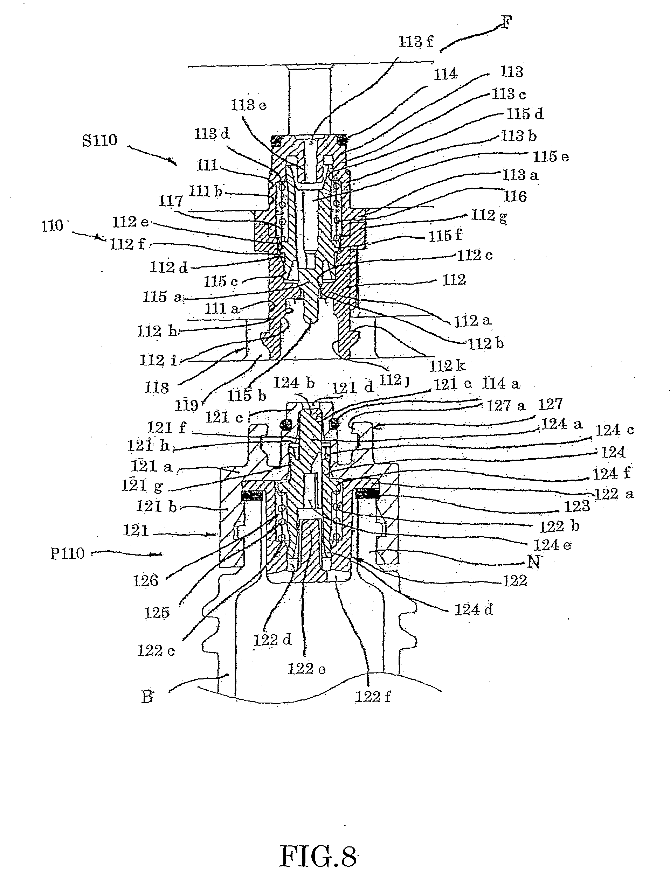

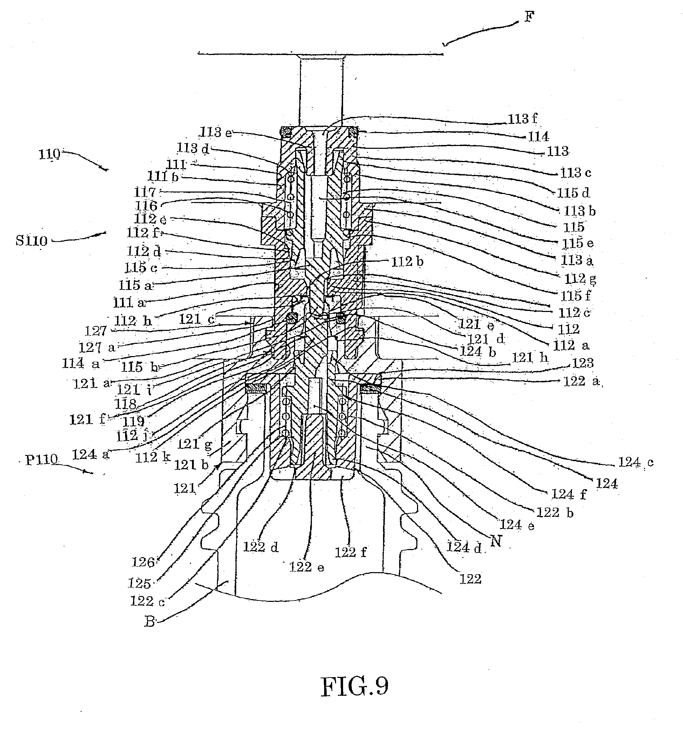

FIGs 8 and 9 are vertical sections of an embodiment of the coupler of the present invention in which FIG. 8 shows a state before coupling and FIG. 9 shows a coupled state.

This coupler 110 is made by a socket S110 and a plug P110 which is fitted and coupled with the socket S110. The socket S110 is provided, for example, on the side of a main body F of a methanol fuel cell and the plug P110 is provided on the side of a cartridge used as a methanol container. The socket S110 and the plug P110 are communicated with each other to supplement fuel to the main body or, alternatively, for exchanging the coupler per se. The main portions of the socket S110 and the plug P110 are made of a non-metallic material, e.g., synthetic resin such as polypropylene and polyphenylene sulfide.

The following description is made as viewed in the vertical direction of the components appearing on the drawings but this description in no way restricts the direction of mounting the coupler to the actual main body. Mounting of the coupler to the main body may be carried out in any direction.

The socket S110 of the coupler 110 has a mounting opening 111 formed in an integral or separate member of the main body F of the fuel cell. In this embodiment, mounting openings 111a and 111b are formed in the foremost end portion and the rear portion. To the inner periphery of the mounting opening 111a of the foremost end side (in each figure, on the lower side) is mounted a substantially cylindrical socket main body 112 whereas in the mounting opening 111b on the rear side (on the upper side of each figure) is mounted a substantially cylindrical housing 113 with a bottom for housing an elastic member.

The socket main body 112 has a partition portion 112a formed in the middle portion and the partition portion 112a has a flow path opening 112b formed in the central portion. The socket main body 112 has a seal portion 112c constituting a valve seat in the upper portion of the flow path opening 112b. In the socket main body 112, a small diameter cylindrical portion 112d and a large diameter cylindrical portion 112e are formed via a stepped portion 112f above the partition portion 112a and a flange portion 112g for fixing is formed in the uppermost outer peripheral portion. The socket main body 112 is thereby fixed, together with a flange portion 113a of a housing 113 to be described later, to the main body F of the fuel cell.

In the socket main body 112, a plug mounting portion 112h is formed below the partition portion 1112a which can be sealed by a stepped portion 112i and an inner diameter portion 112j.

Above the socket main body 112, a housing 113 with a bottom housing an elastic member mounted in the mounting opening 111b is provided with the bottom portion positioned on the upper side and is connected to the socket main body 112 by means of a flange portion 113a formed in the lowermost outer peripheral portion. An O ring 114 is provided in the outer periphery of the upper end portion and the housing 113 is thereby sealed against the mounting opening 111b.

The housing 113 has, on the inside of the flange portion 113a, a large diameter cylindrical portion 113b having the same diameter as the large diameter cylindrical portion 112e of the socket main body 112. A small diameter cylindrical portion 113c is formed above the large diameter cylindrical portion 113b via a stepped portion 113d. A tubular stopper portion 113e is formed concentrically with the small diameter cylindrical portion 113c in a manner to project downwardly to restrict the stroke of a piston valve 115 to be described later. A flow path opening 113f is formed through the central portion of the tubular stopper portion 113e.

In a substantially cylindrical space formed by the socket main body 112 and the housing 113 is mounted the piston valve 115 constituting a valve. The piston valve 115 has, in the central portion of the lower portion, a valve 115a which achieves a seal by contacting the seal portion 112c constituting the valve seat above the partition portion 112a of he socket main body 112. An operation portion 115b projects from the lower end portion of the valve portion 115a.

By causing the operation portion 115b to project from the flow path opening 112b, valves of the socket side and the plug side can be closed and opened in cooperation with the operation portion of the coupled plug P110 to be described later.

In the lower peripheral portion of the piston valve 115 constituting the valve is formed a lower seal portion 115c which reciprocates while contacting the small diameter cylindrical portion 112d of the socket main body 112 and, in the upper peripheral portion of the piston valve 115 is formed an upper seal portion 115d which reciprocates while contacting the small diameter cylindrical portion 113c of the housing 113. In the inner peripheral portion of the piston valve 115 is formed a flow path 115e which opens between the outside of the upper portion of the valve portion 115a and the lower seal portion 115c and opens in the upper end portion of the upper seal portion 115d to communicate with the flow path opening 113f in the stopper portion 113e of the housing 113. By causing the upper end portion of the flow path 115e of the piston valve 115 to abut against the stopper portion 113e of the housing 113, the stroke of the piston valve 115 can be restricted.

Accordingly, when the seal portion 112c which is the valve seat of the socket main body 112 is opened and closed, the inside of the lower seal portion 115c of the piston valve 115 is communicated with and interrupted from the flow path of the main body F of the fuel cell via the flow path 115e in the inner periphery of the piston valve 115 and the flow path opening 113f of the stopper portion 113e of the housing 113.

In the middle portion of the piston valve 115, there is formed an outwardly projecting annular spring engaging portion 115f which reciprocates with a gap between the inner periphery of the large diameter cylindrical portion 112e of the socket main body 112.

A metal helical spring 116 as an elastic member constituting the energizing means is mounted between the stepped portion 113d of the housing 113 and the spring engaging portion 115f of the piston valve 115 to energize the piston valve 115 in closing direction.

In a state in which the piston valve 115 is closed, as shown in FIG. 8, the valve portion 115a is seated on the seal portion 112c constituting the valve seat with a slight gap formed between the lower surface of the spring engaging portion 115f of the piston valve 115 and the stepped portion 112f of the socket main body 112. In this state, the meal helical spring 116 is positioned in the space which is sealed with lower seal portion 115c and the upper seal portion 115d of the piston valve 115 and, therefore, the metal helical spring 116 is completely sealed from the liquid such as methanol flowing through the flow path 115e of the piston valve 115.

In the valve open state in which the piston valve 115 is pushed up by he operation portion 115b, as shown in FIG. 9, the piston valve 115 is pushed up against the force of the metal helical spring 116 whereby the valve portion 115a is disengaged from the seal portion 112c constituting the valve seat to bring about a valve open state. Thus, the inside of the lower seal portion 115c of the piston valve 115 is communicated with the flow path of the main body F of the fuel cell via the flow path 115e in the inner periphery of the piston valve 115 and the flow path opening 113f in the stopper portion 113e of the housing 113.

In this valve open state also, the lower seal portion 115c and the upper seal portion 115d of the piston valve 115 are moved but the metal helical spring 116 which is positioned in the space 117 sealed by the lower seal portion 115c and the upper seal portion 115d of the piston valve 115 is completely sealed from the liquid such as methanol which flows through the flow path 115e of the piston valve 115.

As the piston valve 115 reciprocates between its closed and opened state, the spring engaging portion 115f positioned in the space 117 which is sealed by the lower seal portion 115c and the upper seal portion 115d of the piston valve 115 also reciprocates but, since there is formed a gap which can prevent change in pressure between the outer periphery of the spring engaging portion 115f and the inner periphery of the large diameter cylindrical portion 112e, there is no change in pressure in this space 117 whereby there is no risk of the liquid such as methanol being absorbed or pushed out.

If the spring engaging portion 115f located in the space 117 sealed by the lower seal portion 115c and the upper seal portion 115d of the piston valve 115 reciprocated in contact with the inner periphery of the large diameter cylindrical portion 112e of the socket main body 112, the capacity of the space 117 above and below the spring engaging portion 115f would be changed due to moving of the spring engaging portion 115f with resulting change in pressure.

In that case, the seal by the lower and upper seal portions 115c and 115d would be lost due to this change in pressure and liquid such as methanol would be absorbed from the flow path 115e in the negative pressure state and the liquid would be pushed out to the flow path 115e in the pressurized state and, as a result, ionized metal would be mixed into the liquid flowing through the flow path 115e.

In contrast, in the socket S110, there is no change in pressure in the space 117 and solving out and mixing of ionized metal of the metal helical spring 116 can be completely prevented.

Further, in the socket S110 of the coupler 110, in the lower portion of the lower mounting opening 111a formed in a member attached to the main body F of the fuel cell as an integral or separate member, there are formed locking grooves 119 as one member of coupling holding means 118 for holding the fitted and coupled state with the plug P110. As the locking grooves 119, a couple of arcuate grooves of about 30 degrees are formed oppositely across the central axis. Engaging portions 112k are formed in half of opposite portions in the outer peripheral portion of the socket main body 112 and an operation (twist lock) is made by combining insertion and release in the axial direction and pivotal movement so that hooks are engaged by the two engaging portions 112k and the hooks are released in portions where there are no stepped portions.

The plug P110 which is fitted and engaged with the socket S110 will now be described.

The plug P110 of the coupler 110 has its component parts made of a non-metallic material in the same manner as in the socket S110 so that, in case a metal helical spring is used, it will not come into direct contact with liquid flowing through the flow path.

The plug P110 of the coupler 110 comprises a generally two-stage cylindrical plug main body 121 which is mounted in the outer periphery of the foremost end portion (upper end portion in the drawing) of the nozzle N of the container B containing methanol used as fuel for the fuel cell. The nozzle N of the container B is mounted in the inner peripheral portion of a large diameter cylindrical portion 121b below a partition portion 121a and the nozzle N is fixed by an engaging ring portion provided in the lower end portion.

In this plug main body 121, a small diameter cylindrical portion 121c which is inserted in and released from the plug mounting portion 112h of the socket S110 projects upwardly from the partition portion 121a. An O ring 114a is mounted in the outer periphery of the small diameter cylindrical portion 121c to achieve a seal in the radial direction with the inner diameter portion 112j in the lower portion of the socket mounting portion 112h.

A flow path 121d is formed in the central portion of the upper portion of the small diameter cylindrical portion 121c of the plug main body 121 and a seal portion 121e constituting a valve seat is formed in the inner peripheral portion of the lower end portion of the flow path 121d.

In the inner periphery of the small diameter cylindrical portion 121c are formed an inner small diameter portion 121f and an inner large diameter portion 121g via an inner stepped portion 121h.

A substantially cylindrical housing 122 having a bottom is provided below the plug main body 121 in such a manner that it is located in the nozzle N of the container B with an upper end flange portion 122a abutting against the upper end surface of the nozzle N via a packing 123 to thereby hold the nozzle N with the plug main body 121.

In this housing 122, a large diameter cylindrical portion 122b is formed in the upper portion and a small diameter cylindrical portion 122d is formed via a stepped portion 122c in such a manner that this stepped portion 122c constitutes a spring mounting portion. In the lower end portion of the housing 122 is provided an upwardly projecting stopper portion 122e having a small diameter columnar shape for performing a function of a stopper restricting stroke of a piston valve 124 to be described later. A flow path opening 122f is formed in the outer periphery of the lower end stopper portion 122e to communicate with the inside of the container B.

In a substantially cylindrical space formed by the plug main body 121 and the housing 122 is mounted the piston valve 124 constituting a valve. The piston valve 124 has, in he foremost end outer peripheral portion thereof, a valve portion 124a which achieves a seal with the seal portion 121e constituting a valve seat in the upper portion of the small diameter cylindrical portion 121c of the plug main body 121. The piston valve 124 also has an operation recess portion 124b for operation in the foremost end surface portion.

Accordingly, by pushing this operation recess portion 124b with the above described operation portion 115b of the socket S110 in a coupled state, the valves of the socket side and the plug side can be closed and opened by cooperation of these components.

In the upper and lower outer peripheral portions of the piston valve 124 constituting the valve, there are provided an upper seal portion 124c which reciprocates in contact with the inner large diameter portion 121g of the plug main body 121 and a lower seal portion 124d which reciprocates in contact with the inner small diameter cylindrical portion 122d of the housing 122. Further, in the piston valve 124, there is formed a flow path 124e opening from the lower central portion of the piston valve 124 through the inside of the upper seal portion 124c which is communicated with the flow path 121d of the plug main body 121 through the seal portion 121e and also is communicated with the flow path opening 122f of the housing 122.

Therefore, when the valve portion 124a of the piston valve 124 is displaced from the seal portion 121e constituting the valve seat of the plug main body 121 to close and open the valve, the flow path 124e of the piston valve 124 is communicated with and interrupted from the inside of the container B via the flow path opening 122f of the housing 122.

By causing the lower end portion of the flow path 124e of the piston valve 124 to abut against the stopper portion 122e of the housing 122, the stroke of the piston valve 124 can be restricted.

A metal helical spring 125 as an elastic member constituting energizing means is mounted between the stepped portion 122c constituting the spring mounting portion of the housing 122 and the spring engaging portion 124f of the piston valve 124 to energize the piston valve 124 in closing direction.

Accordingly, in a state in which the piston valve 124 is closed, as shown in FIG. 8, the valve portion 124a is seated on the seal portion 121e constituting the valve seat of the plug main body 121 with a small gap being formed between the upper surface of the spring engaging portion 124f of the piston valve 124 and the partition portion 121a of the plug main body 121. Thus, the metal helical spring 125 is positioned in the space 126 sealed by the upper seal portion 124c and the lower seal portion 124d of the piston valve 124 and thereby is completely sealed from the liquid such as methanol flowing through the flow path 124e of the piston valve 124.

When the piston valve 124 is in an opened state in which it is pushed down by the operation recess portion 124b, as shown in FIG. 9, the piston valve 124 is pushed down against the force of the metal helical spring 125 with the valve portion 124a being separated from the seal portion 121e constituting the valve seat to open the valve whereby the flow path 124e of the piston valve 124 is communicated with the inside of the container B through the flow path 122f of the housing 122.

In this valve open state, the upper seal portion 124c and the lower seal portion 124d of the metal helical spring 125 are displaced but the piston valve 124 is located in the space sealed by the upper seal portion 124c and the lower seal portion 124d and, therefore, it is completely sealed from the liquid such as methanol flowing through the flow path 124e of the piston valve 124.

As the piston valve 124 reciprocates between the valve closed and valve open states, the spring engaging portion 124f located in the space 126 sealed by the upper seal portion 124c and the lower seal portion 124d of the piston valve 124 reciprocates but, since there is a gap formed between the outer periphery of the spring engaging portion 124f and the inner periphery of the large diameter cylindrical portion 122b, there is no change in pressure in the space 126 whereby there is no risk of the liquid such as methanol being absorbed or pushed out.

As described with respect to the socket S110, if the spring engaging portion 124f located in the space 126 sealed by the upper and lower seal portions 124c and 124d of the piston valve 124 reciprocated in contact with the inner periphery of the large diameter cylindrical portion 122b of the plug main body 121, the capacity of the space 126 above and below the spring engaging portion 124f would be changed due to moving of the spring engaging portion 124f with resulting change in pressure.

In that case, the seal by the upper and lower seal portions 1124c and 124d would be lost due to this change in pressure and liquid such as methanol would be absorbed from the flow path 124e in the negative pressure state and the liquid would be pushed out to the flow path 124e in the pressurized state and, as a result, ionized metal would be mixed into the liquid flowing through the flow path 124e.

In the plug P110, no pressure change is likely to occur in the space 126 and solving out and mixing of ionized metal of the metal helical spring 125 in the liquid such as methanol can be completely prevented.

In this plug P110 of the coupler 110, lock arms 127 which are members cooperating with the coupled state holding means 118 for maintaining a fitted and coupled state with the socket S110 are provided in the plug main body 121. The lock arms 127 may be formed, for example, by forming hooks 127a in the inner foremost end portions of a couple of lock arms 127. As described above, in the socket S110, in the lower portion of the lower mounting opening 111a formed in a member attached to the main body F of the fuel cell as an integral or separate member, there are formed locking grooves 119 as one member of coupling holding means 118 for holding the fitted and coupled state with the plug P110. As the locking grooves 119, a couple of arcuate grooves of about 30 degrees are formed oppositely across the central axis. Engaging portions 112k are formed in half of opposite portions in the socket main body 112. By inserting the hooks 127a in the locking grooves 119 in which, by combining insertion and release in the axial direction and pivotal movement, the hooks are engaged by the two engaging portions 112k and the hooks are released in portions where there are no stepped portions, and by pivoting the hooks 127a to the engaging portions 112k of the socket main body 112 which are located half of opposite portions, the fitted and coupled state can be maintained. By pivoting back the hooks 127a to the portions where there are no engaging portions 112k and pulling out the hooks 127a, the fitted and coupled state can be released.

An unillustrated cover cap can be screwed on the container B for the plug P110. Such cap can be sealed with a packing attached to the inner top portion of the cover cap.

When the socket S110 and the plug P110 are brought to a fitted and coupled state with each other, the O ring 114a at the outer periphery of the small diameter cylindrical portion 121c of the plug main body 121 first comes in contact with the inner peripheral surface of the inner diameter portion 112j of the plug mounting portion 112h of the socket main body 112 to achieve a seal between them. In this initial coupled state, the valve portion 115a of the socket S110 is seated on the seal portion 112c without pushing down of the operation recess portion 124b of the piston valve 124 of the plug P110 by the operation portion 115b of the socket S110, and the valve portion 124a of the plug P110 is seated on the seal portion 121e whereby the valve closed state is maintained.

As the plug P110 is further pushed into the socket S110, the operation portion 115b of the socket S110 abuts against the operation recess portion 124b of the piston valve 124 of the plug P110 to push back each other whereby the valve portions 115a and 124a of the piston valves 115 and 124 of the socket S110 and the plug P110 are separated from the seal portions 112c and 121e and the plug P110 is communicated with the socket S110.

In this state, even if there is difference in spring force between the metal helical springs 116 and 125, since the strokes of the piston valves 116 and 124 of the socket S110 and the plug P110 are restricted by the stopper portions 113e and 122e, one of the metal helical springs 116 and 125 having a weaker spring force is displaced first and is brought in the valve open state by abutting against the stopper and then the other of the metal helical springs having a stronger spring force is displaced and, after all, both of the valves are opened.

Accordingly, by adjusting the spring force, the order of opening of the valves can be determined. For example, the valve of the socket S110 for the main body may be opened first and the valve of the plug P110 for the container may be opened later.

The fitted and coupled state between the plug P110 and the socket S110 can be maintained by inserting and pivoting the hooks 127a of the lock arms 127 to engage the engaging portions 112k of the socket main body 112 in the locking grooves 119 of the coupled state holding means 118.

Methanol can be supplemented by supplying methanol under pressure to the tank of the fuel cell F by squeezing the container B, thereby compressing air in the space once and returing the compressed air to the container by stopping squeezing. Alternatively, the container itself may be exchanged.

As described in detail in the foregoing, this coupler 110 satisfies conditions required for a coupler provided between a main body of a methanol fuel cell and a container of methanol as a fuel.

### Industrial Applicability

The present invention can be applied to a coupler used for shifting liquid etc. from a container to a container on a main body side in a simple manner. The invention is particularly suitable for a coupler provided between a cartridge container of a methanol fuel cell and a main body of a fuel cell.

## Claims

1. A coupler comprising a socket comprising a valve and energizing means for energizing the valve in a closing direction and a plug comprising a valve and energizing means for energizing the valve in a closing direction and being capable of being detachably fitted and coupled to the socket and being capable of opening the two valves to communicate the socket and the plug to each other in a fitted and coupled state,
**CHARACTERIZED IN THAT** said coupler comprises an elastic member holder mounted at an base end portion of the valve of at least either one of the socket and the plug in a sealable manner and in such a manner that the valve can reciprocate in closing and opening directions, said elastic member holder housing an elastic member constituting the energizing means for energizing the valve and a flow path being formed outside of the elastic member holder.

2. A coupler comprising a socket comprising a valve and energizing means for energizing the valve in a closing direction and a plug comprising a valve and energizing means for energizing the valve in a closing direction and being capable of being detachably fitted and coupled to the socket and being capable of opening the two valves to communicate the socket and the plug to each other in a fitted and coupled state,
**CHARACTERIZED IN THAT** said energizing means for energizing the valve of at least either one of the socket and the plug in a closing and opening directions is made of a non-metallic material.

3. A coupler comprising a socket comprising a valve and energizing means for energizing the valve in a closing direction and a plug comprising a valve and energizing means for energizing the valve in a closing direction and being capable of being detachably fitted and coupled to the socket and being capable of opening the two valves to communicate the socket and the plug to each other in a fitted and coupled state,
**CHARACTERIZED IN THAT** said coupler comprises an elastic member holder mounted at an base end portion of the valve of at least either one of the socket and the plug in a sealable manner and in such a manner that the valve can reciprocate in closing and opening directions, said elastic member holder housing an elastic member constituting the energizing means for energizing the valve and a flow path being formed outside of the elastic member holder, and said energizing means for energizing the valve of at least the other of the socket and the plug in closing and opening directions is made of a non-metallic material.

4. A coupler as defined in any of claims 1-3 wherein said elastic member constituting the energizing means is made of either a metal helical spring, a non-metallic helical spring or a non-metallic elastic material.

5. A coupler as defined in any of claims 1-3 wherein a valve seat member to and from which the valve reciprocates is provided in a main body of the socket or in a main body of the plug, and a seal portion for sealing with an outer peripheral surface of a foremost end portion of the valve and a slit portion adjacent to the seal portion and constituting a flow path are provided on the valve seat member.

6. A coupler as defined in any of claims 1 - 3 wherein an operating section for opening the two valves to a communicating state is provided in at least either the socket or the plug.

7. A coupler as defined in any of claims 1-3 wherein the valve provided in the plug is made of synthetic resin and is formed in a substantially hollow inverted conical shape and an inner peripheral surface of the central opening of a foremost end portion of the valve is made a seal portion and the plug is provided with a valve seat member comprising a valve seat which contacts the seal portion and is made in a columnar shape.

8. A coupler as defined in any of claims 1-3 wherein the base end portion of the valve provided in the plug which valve is made of synthetic resin is formed in a manner to project from a foremost end surface of the plug in such a manner that the base end portion of the plug can be pushed against a ceiling portion of a cap fitted on the plug to form a seal.

9. A coupler as defined in any of claims 1-3 wherein coupling holding means for maintaining the fitted and coupled state between the socket and the plug is provided between the socket and the plug.

10. A coupler as defined in any of claims 1-3 wherein after a communication path between the socket and the plug is sealed from the outside, the valve of the socket and the valve of the plug can communicate with each other.

11. A coupler comprising a socket comprising a valve and energizing means for energizing the valve in a closing direction and a plug comprising a valve and energizing means for energizing the valve in a closing direction and being capable of being detachably fitted and coupled to the socket and being capable of opening the two valves to communicate the socket and the plug to each other in a coupled state,
**CHARACTERIZED IN THAT** said coupler comprises a housing provided on the outside of a base end portion of the valve of at least either one of the socket and the plug and housing the valve in such a manner that the valve can reciprocate in closing and opening directions and sealing can be made by end portions of the valve, an elastic member for energizing the valve provided on the outside of the valve in the housing, and a flow path formed inside of the valve.

12. A coupler as defined in claim 11 wherein change in pressure can be prevented in space outside of the valve in the housing wherein the elastic member is provided.

13. A coupler as defined in claim 11 or 12 wherein a seal member for sealing the fitted and coupled state between the socket and the plug is mounted on the plug.

14. A coupler as defined in claim 11 or 12 wherein coupling holding means for maintaining the fitted and coupled state between the socket and the plug is provided between the socket and the plug.

15. A coupler as defined in claim 11 or 12 wherein after a communication path between the socket and the plug is sealed from the outside, the valve of the socket and the valve of the plug can communicate with each other.

16. A coupler as defined in any of claims 1, 2, 3 and 11 wherein said coupler is provided between a main body of a methanol fuel cell and a container containing methanol used as a fuel.
